# EUROPEAN PATENT SPECIFICATION

(11) **EP 1 355 407 B1**
(45) Date of publication and mention of the grant of the patent: **26.10.2005**
(21) Application number: 03252243.5
(22) Date of filing: 09.04.2003
(51) Int. Cl.: H02K 15/16

(54) **Rotor with balance adjustment**
Läufer mit Unwuchtsausgleich
Rotor avec ajustement du balourd

(30) Priority: 18.04.2002 JP 2002116436
(43) Date of publication of application: 22.10.2003
(73) Proprietor: FANUC LTD, Minamitsuru-gun, Yamanashi 401-0597 (JP)
(72) Inventor: Okamoto, Takashi, Fanuc Manshonharimomi, R. 11-605, Minamitsuru-gun, Yamanashi, 401-0511 (JP); Furuya, Tsuyoshi, Minamitsuru-gun, Yamanashi, 401-0301 (JP); Imabori, Katsuhiko, Tokyo, 124-0021 (JP)
(74) Representative: Billington, Lawrence Emlyn

(56) References cited:
- FR-A- 1 280 370
- US-A- 4 644 201
- US-A- 5 892 306
- PATENT ABSTRACTS OF JAPAN vol. 2000, no. 14, 5 March 2001 (2001-03-05) -& JP 2000 321162 A (DENSO CORP), 24 November 2000 (2000-11-24)
- PATENT ABSTRACTS OF JAPAN vol. 2002, no. 05, 3 May 2002 (2002-05-03) -& JP 2002 010588 A (DENSO CORP), 11 January 2002 (2002-01-11)

## Description

The present invention relates to an electric motor having a rotor and a manufacturing method therefor and, more specifically, to an electric motor capable of simple balance adjustment, and a manufacturing method therefor.

A rotor of an electric motor requires high-accuracy balance. If the mass distribution of a member that constitutes the rotor is deflected so that the center of gravity is deviated from the axis of rotation, for example, the rotor shakes as it rotates and applies an undesired load to the rotating shaft member.

The following methods for correcting such an awkward situation have been proposed: (a) loading the rotor with resin, (b) machining the rotor, and (c) fitting a washer on a projection that protrudes outward from the rotor.

However, these previous methods involve the following problems. First, the method (a) in which the balance is adjusted by loading resin into the rotor requires a process of curing the resin as well as equipment for loading the resin, so that it lacks simplicity and economical efficiency. Further, the manufacturing cycle time lengthens by a margin corresponding to the resin curing time, thereby influencing the productivity. If the resin is not cured satisfactorily, it may possibly leak out of the rotor.

According to the method (b) in which the balance is adjusted by machining the rotor, cuttings may possibly be produced and adhere to the rotor. In some cases, moreover, the machining work may damage the rotor entirely or partially.

According to the method (c) in which the balance is adjusted by fitting a washer member on a projection on the rotor, furthermore, the volume of the space that is occupied by the rotor during rotation increases, so that the capacity of the electric motor must be increased correspondingly. Thus, miniaturization of the motor is hindered.

Another proposed balancing method is disclosed in US-A-4,644,201 in which metal material is inserted into rotor cavities. However, a simple process for retaining the metal material in the rotor cavities is not disclosed.

Accordingly, the object of the present invention is to provide an electric motor of which a rotor can be adjusted in balance by a simple process and a method for manufacturing such an electric motor.

According to one aspect of the present invention, there is provided an electric motor having a rotor, comprising: at least one cavity in the rotor; and at least one resilient members fitted into a said cavity for balance adjustment; characterised in that: the or each said resilient member is a metal member formed to be oversized with respect to its cavity and formed to be compressed for insertion therein, after which insertion the resilience of the compressed member urges the member to expand against the interior of its cavity, thereby serving to anchor the resilient member to the inner wall of its cavity.

Preferably, in an embodiment of the invention, at least one cavity is formed in the rotor so as to extend along, or substantially parallel to, the axis of rotation of the rotor. For balance adjustment, moreover, at least one resilient member is fitted into the cavity.

The resilient member may be a cylindrical resilient member that is urged to expand in the direction of the radius of rotation of the rotor by resilience. This resilient bias in the expanding direction serves to anchor the resilient member to the rotor after the resilient member is fitted into the cavity. For example, corrugate or latticed grooves may be formed on the outer surface of the cylindrical resilient member to improve the anchoring.

The resilient member may alternatively be a planar resilient member that has an outer peripheral portion urged to expand in the direction of the radius of rotation of the rotor. In this case, the resilient member can be anchored to the rotor after it is fitted into the cavity.

According to another aspect of the present invention, there is provided a manufacturing method for an electric motor having a rotor, comprising fitting at least one resilient member into a corresponding cavity in the rotor to provide balance adjustment; characterised in that: the or each said resilient member is a metal member formed to be oversized with respect to its cavity and formed to be compressed for insertion therein: the method comprising a step of inserting said member into its cavity so that after it has been inserted into its cavity, it lies compressed therein with its resilience urging the member to expand against the interior of its cavity, thereby serving to anchor the resilient member to the inner wall of its cavity.

The resilient member to be fitted into the cavity may be a cylindrical resilient member that is urged to expand in the direction of the radius of rotation of the rotor by resilience. Preferably, for example, corrugate or latticed grooves are formed on the outer surface of the cylindrical resilient member. These grooves can enhance the force of engagement between the rotor and the resilient member.

The resilient member may alternatively be a planar resilient member that has an outer peripheral portion urged to expand in the direction of the radius of rotation of the rotor. For example, the outer peripheral portion of the planar resilient member may be bent so that it can be urged resiliently to expand outward.

At least one cavity may be formed extending along, or parallel to, the axis of rotation of the rotor, in order to insert the resilient member for balance adjustment into the rotor. The cavity may be in the form of a recess or through hole. In general, the rotor of an electric motor is formed by laminating electromagnetic steel sheets of specific shapes to one another. Therefore, a recess or through hole can be formed in the resulting laminated structure by suitably shaping the steel sheets before they are assembled. Alternatively, the recess or through hole may be formed by machining the assembled rotor. The resilient member to be fitted into the cavity may be a coil spring or plate spring of solid resin or metal.

If a resilient member having a substantial resilient force that acts in the direction of, or parallel to, the axis of rotation is inserted into the cavity, possibly it is necessary only that the resilient force be received by the cavity to prevent the resilient member from slipping out of the cavity.

If the resilient member is cylindrical, its cross section may be C- or U-shaped so that the whole body of the resilient member can enjoy resilience. This resilient member is designed so that it has a cross section with a radius of rotation a little wider than that of the cavity before it is inserted into the cavity. After the resilient member is inserted into the cavity, it is anchored to the rotor by its resilience tending to make the member expand within the cavity.

The cross section of the resilient member is not limited to the shape of a C or U. It may alternatively be in the shape of a polygon having one side cut, or any other desired shape that is partially cut. The resilient member need only be resilient enough to be anchored to the rotor.

According to the electric motor manufacturing method of the invention, an electric motor is manufactured by using a rotor in which one or more resilient members are fitted into a cavity (recess, through hole or groove), depending on the necessary balancing conditions for the adjustment of rotation balance. The or each resilient member may be fitted into its cavity with use of a push-in mechanism that operates by oil pressure, compressed gas, or an electric motor.

According to the present invention, balance adjustment of a rotor of an electric motor can be completed by a process of inserting the resilient member(s), and need not entail processes that have been required previously. Since machining work is not required in all cases moreover, there need be no problem of the production of damaging cuttings. Also, since the or each resilient member is inserted into the rotor, the capacity of the rotor during rotation can be restricted, so that the space in the motor can be utilized effectively. Thus, the electric motor can be downsized with ease.

### BRIEF DESCRIPTION OF THE DRAWINGS

FIGS. 1(a) and 1(b) show an example of a rotor of an electric motor adjusted in balance and in which FIG. 1(a) is a sectional view taken sideways and FIG. 1(b) is a plan view of the rotor taken from the right-hand side of FIG. 1(a).
FIG. 2 is a view showing the way resilient members are fitted into the rotor shown in FIGS. 1(a) and 1(b) ;
FIG. 3 is a view showing the way resilient members different from the ones shown in FIG. 2 are fitted into cavities of the rotor;
FIGS. 4(a) and 4(b) are views illustrating a resilient member different from the resilient member shown in FIGS. 1 and 2, in which FIG. 4(a) is a side view and FIG. 4(b) is a plan view of the resilient member taken from the right-hand side of FIG. 4(a);
FIGS. 5(a) and 5(b) are views illustrating a modification of the resilient member shown in FIGS. 4(a) and 4(b);
FIGS. 6(a) and 6(b) are views illustrating another embodiment of resilient member; and
FIG. 7 is a flowchart illustrating typical processes of manufacturing an electric motor according to the invention.

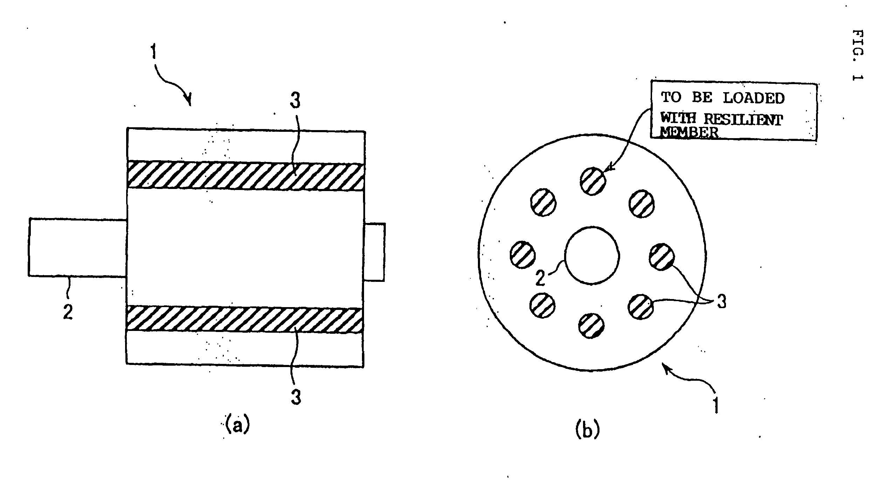

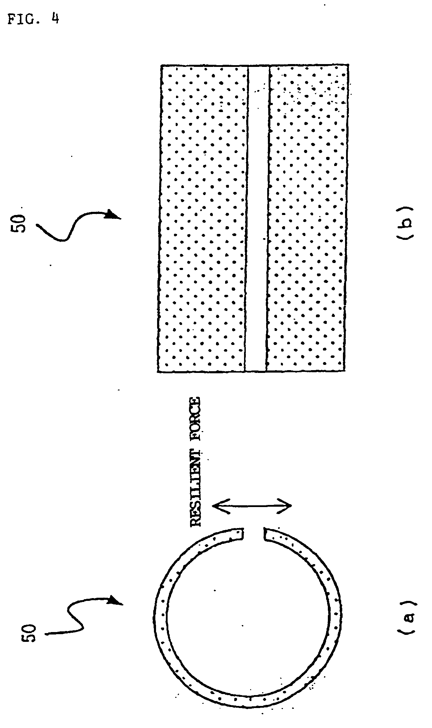

It is to be understood that Figures 4, 5 and 6 show embodiments, of the present invention employing metal resilient members, whereas Figures 1, 2 and 3 are not in accordance with the invention and are shown for initial explanatory purposes only.

As shown in FIGS. 1(a) and 1(b), a rotor 1 of an electric motor is cylindrical and has a rotating shaft 2 that penetrates its central portion. The rotor 1 is provided with a plurality of cavities 3 that extend parallel to the shaft 2. Each cavity 3 has the form of a through hole, and can be fitted with a resilient member for balance adjustment. The resilient member will be mentioned later. In alternative embodiments (not shown) one or more cavities 3 could each be a recess extending only partially through or into the rotor 1.

The number, positions, size, etc. of the cavities 3 are settled depending on the execution conditions for the balance adjustment, including the size, weight, etc. of the resilient members used. Although a plurality of cavities 3 is normally used, only one cavity 3 may be used with the same result, unless the balance adjustment is hindered. Normally, moreover, the resilient members are fitted individually into all the cavities 3. In some cases, however, the resilient members may be fitted into only one or some of the cavities 3.

Further, two or more resilient members with different shapes, weights, etc. may be fitted into each cavity 3, depending on the mode of balance adjustment, which will be mentioned later.

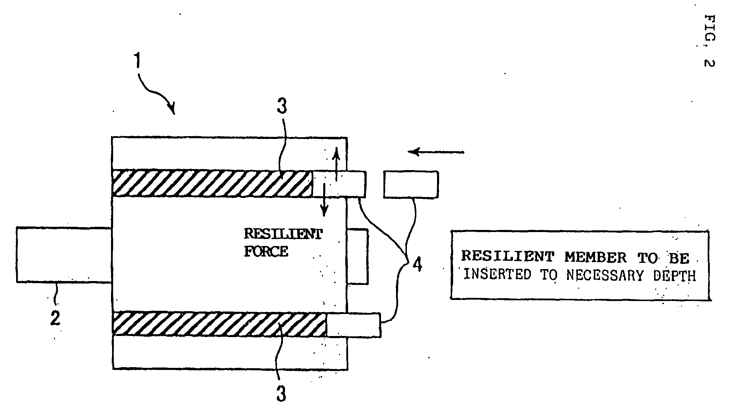

FIG. 2 shows the way resilient members 4 are fitted in the rotor 1 shown in FIGS. 1(a) and 1(b). In a natural state, as shown in FIG. 2, each resilient member 4 has an outside diameter a little greater than the inside diameter of each cavity 3, and is resiliently (e.g. elastically) deformable in its radial direction at least. This property can be realized if each resilient member 4 is formed of an elastic rubber-like resin mass, a resilient coil spring or the like, for example. As shown in FIG. 2, the resilient members 4 are inserted to a necessary depth for balance adjustment in their corresponding cavities 3. The depth of insertion of the resilient members 4 can be adjusted according to the length, number, weight, etc. of the resilient members 4. The length can be selected freely if each resilient member 4 can be cut to any desired length. If the resilient members 4 are formed of short elastic pellets, the depth can be adjusted by varying the number of elastic members. Further, resilient members 4 having the same size, same shape, and different specific gravities may be used appropriately.

In the example shown in FIG. 2, each resilient member 4 in its natural state has an outside diameter a little greater than the inside diameter of each cavity 3, and is resiliently, e.g. elastically, deformable in its radial direction at least. In this case, a leftward external force must be applied to the resilient members 4 to push them individually into the cavities 3. Since this operation is simple, however, it can utilize a simple mechanical force such as a force of pressure from a plunger that is driven by means of an air cylinder, or a push of a robot.

When each resilient member 4 is inserted into its corresponding cavity 3, it applies its resilient, e.g. elastic, force which acts so as to increase its own diameter, to the cavity 3 so that it is anchored to the inner wall of the cavity 3. If the rotor 1 rotates, therefore, there is no possibility of the resilient member 4 shifting in or slipping out of the cavity 3. In order to prevent dust from getting into the cavity 3, moreover, the inlet opening of the cavity 3 may be closed by means of a suitable cap.

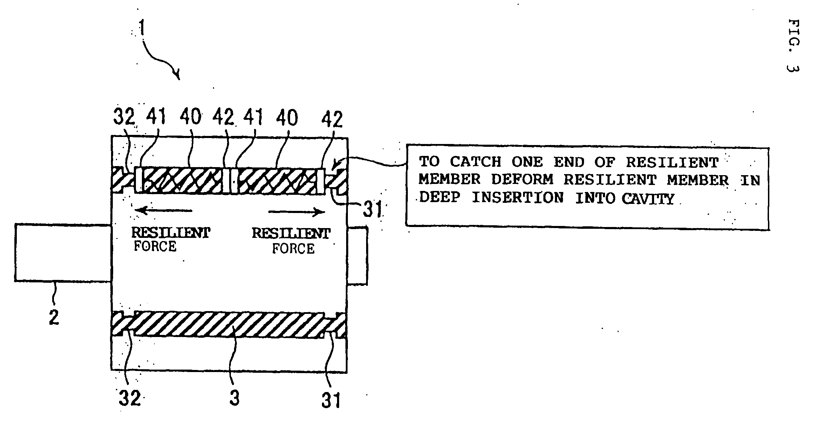

An example that uses resilient members 40 shaped differently from the resilient members 4 used in the example shown in FIG. 2 will now be described with reference to FIG. 3. In the example shown in FIG. 3, each cavity 3 is in the form of a through-hole, and constrictions 31 and 32 having a somewhat smaller diameter are formed near the inlet opening and the innermost part (base of the through-hole), respectively.

Where only one resilient member 40 is inserted in a cavity, in a natural state the resilient member 40 is a resilient body that is a little longer than the distance between the constrictions 31 and 32, and is resiliently deformable in a direction parallel to the axis of the rotating shaft 2. This property can be realized if the resilient member 40 is formed of a coil spring, for example. Flange-shaped end members 41 and 42 are attached individually to the opposite ends of the or each resilient member 40. The end members 41 and 42 have an outside diameter a little greater than the inside diameter of the constrictions 31 and 32. If a given force of pressure is applied to each resilient member 40 so that it is pushed in through the constriction 31, the elastic member 40 is resiliently deformed, so that it can pass through the constriction 31.

In the example shown in FIG. 3, two resilient members 40 are inserted into each cavity 3. Depending on the contents of necessary balance adjustment, however, the resilient members 40 may not be inserted into one or some of the cavities 3, in some cases.

In the example shown in FIG. 3, the resilient members 40 can be fitted into the cavities 3 if they are subjected to a leftward external force. Since this operation is simple, it can utilize a simple mechanical force such as a force of pressure from a plunger that is driven by an air cylinder, or a push of a robot.

Once each resilient member 40 is inserted into that part of each cavity 3 which is situated between the constrictions 31 and 32, it tends to expand to its own natural length. Since its end portions run-up against the constrictions 31 and 32 with a reduced inside diameter, however, or against the end member 41, 42 of the adjacent resilient member 40, the or each resilient member 40 can be stably held in the cavity 3. If the rotor 1 rotates, therefore, there is no possibility of a resilient member 40 shifting in or slipping out of the cavity 3. In order to prevent dust from getting into the cavity 3, moreover, the inlet opening of the cavity 3 may be closed by means of a suitable cap.

Although mainly elastic resilient members 4 or 40 are fitted individually into the cavities 3 of the rotor 1 in the embodiments described above, they may be replaced by resilient members in other forms. FIGS. 4(a) to 6(b) show examples of these alternative examples.

FIGS. 4(a) and 4(b) show a substantially cylindrical resilient member 50 that has a C-shaped cross section in the direction of the radius of rotation. The body of the member 50 as a whole is resilient, is metallic for example, and has a diameter (outside diameter of the C-shaped arc of FIG. 4a) a little greater than the inside diameter of the cavity 3 when the resilient member 50 is in its natural state. When the resilient member 50 is fitted in the cavity 3, it is compressed so that the natural outside diameter of the C-shaped arc is reduced. In this case, it is necessary only that the resilient member 50 be released from its compression and left in the cavity 3 after it is inserted into the cavity 3. This operation can be carried out by means of a robot hand, for example.

The resilient member 50, once inserted into the cavity 3, is prevented from increasing its own diameter by the inner wall of the cavity 3, so that its resilient expansive force acts on the inner wall. Thus, the resilient member 50 can be stably anchored to the inner wall of the cavity 3 (see FIGS. 1a and 1b). One or more resilient members 50 shown in FIGS. 4(a) and 4(b) may be fitted in each cavity 3 (or no resilient member 50 may be fitted in one or more of the cavities 3, in some cases).

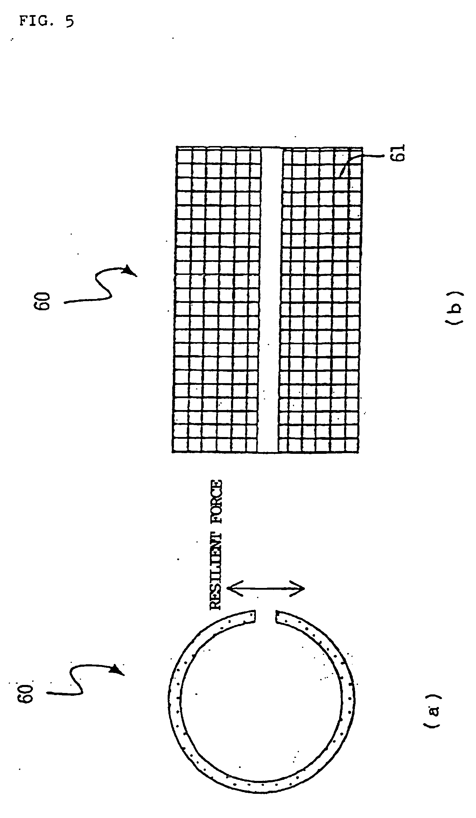

A resilient member 60 shown in FIGS. 5(a) and 5(b) is a modification of the resilient member 50 shown in FIGS. 4(a) and 4(b). The resilient member 60 has the same construction as the resilient member 50, except for latticed grooves that are cut in its outer peripheral surface, as shown in FIG. 5(b). The cut grooves may be of any other pattern than a lattice. For example, they may be of a corrugate pattern. These grooves can enhance the force of engagement between the body of the rotor 1 and the resilient member 60.

The resilient member 60, like the resilient member 50, is metallic for example, and has a diameter (outside diameter of the C-shaped arc of FIG. 5a) a little greater than the inside diameter of the cavity 3 when the resilient member 50 is in its natural state. When the resilient member 60 is fitted in the cavity 3, it is compressed so that the outside diameter of the C-shaped arc is reduced. In this case, it is necessary only that the resilient member 60 be released from the compression and left in the cavity 3 after it is inserted into the cavity 3. This operation can be carried out by means of a robot hand, for example.

The resilient member 60, once inserted into the cavity 3, is prevented from increasing its own diameter by the inner wall of the cavity 3, so that its expansive resilient force acts on the inner wall. Thus, the resilient member 60 can be stably anchored to the inner wall of the cavity 3. One or more resilient members 60 as shown in FIGS. 5(a) and 5(b) may be fitted in each cavity 3, or no resilient member 60 may be fitted in one or more of the cavities 3, in some cases.

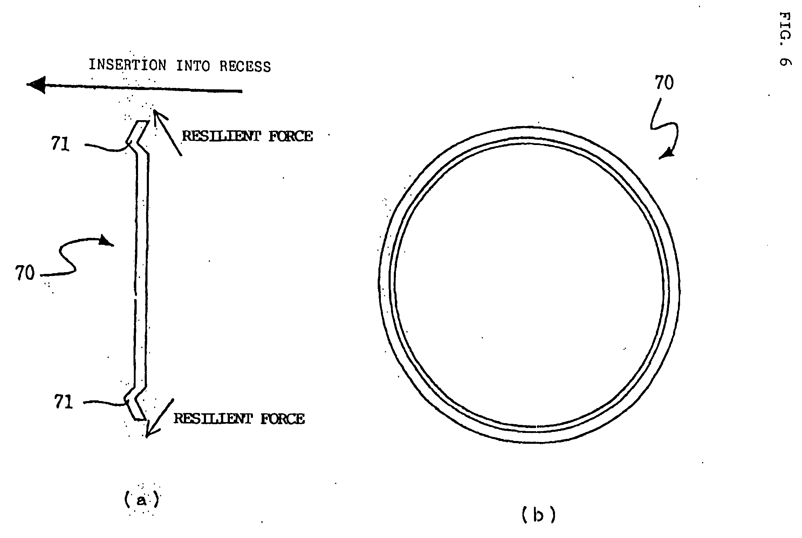

FIGS. 6(a) and 6(b) show a disc-shaped resilient member 70 of which the outer peripheral portion is shaped to be resiliently deformable. The resilient member 70 is metallic for example, and has a bent portion 71 at its outer peripheral edge portion. The bent portion 71 is resiliently deformable in the diametrical direction of the resilient member 70.

In a natural state, the outside diameter of the resilient member 70 (outside diameter of the disc of FIG. 6b) is a little greater than the inside diameter of the cavity 3. When the resilient member 70 is fitted in the cavity 3, it is compressed so that the diameter of the disc is reduced. In this case, it is necessary only that the resilient member 70 be released from the compression and left in the cavity 3 after it is inserted into the cavity 3. This operation can be carried out by means of a robot hand, for example.

Once the resilient member 70 is inserted into its cavity 3, it tends to increase its own diameter by the expansive resilient action of the bent edge portion 71.

However, this tendency is arrested by the inner wall of the cavity 3, and the resilient edge portion 71 applies its expansive elastic force to the inner wall of the cavity 3. Thus, the resilient member 70 can be stably anchored to the inner wall of the cavity 3.

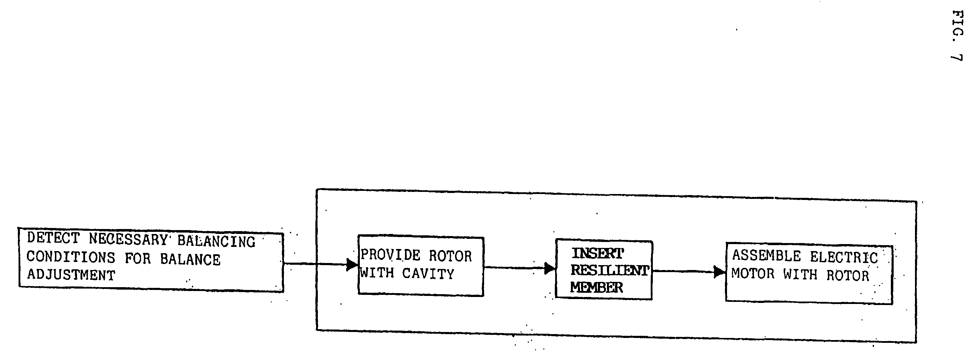

FIG. 7 is a flowchart showing an outline of a manufacturing process for an electric motor for the case where any of the resilient members 4, 40, 50, 60 and 70 described above is used for balance adjustment.

A rotation test is first conducted for the electric motor, before the insertion of the or each resilient member, by using a measuring device or the like. By doing this, necessary balancing conditions (e.g., positions of the cavities and number of resilient members to be inserted in the cavities) for balance adjustment are detected. Subsequently, the cavities are formed by machining the pre-formed rotor. Alternatively, a rotor having appropriate cavities can subsequently be manufactured according to the design, reflecting the balancing condition thus obtained.

Then, a necessary number of resilient members are fitted into the or each appropriate cavity. If necessary, the inlet opening of the cavity is closed by means of a cap. The rotor, thus fitted with the resilient members for balance adjustment, is assembled into a product by conventional assembly processes.

According to the present invention, the balance adjustment of the rotor of an electric motor can be executed by simple processes without entailing high cost or taking much time. Since the necessary operation and configuration for the balance adjustment are simple, the balance adjustment can be automated with ease.

Since, in some cases, no cutting or machining work is required, moreover, there is no problem of possibly damaging cuttings being produced. Since the resilient members are inserted into the rotor, the capacity of the rotor during rotation can be restricted, so that the electric motor can be downsized with ease.

In the foregoing embodiments, the resilient members can be seen to be either elastic members such as elastic rubber-like members for example, or resilient members such as appropriately-formed metallic members, possibly coil springs.

Also, each cavity 3 has been shown as a through-hole extending entirely through the body of the rotor 1. It will be appreciated that in some embodiments one or more cavities 3 could be simply recesses extending only partly into the body of the rotor 1, and not entirely through it. This could particularly be the case when accommodating disc-shaped resilient members as shown in Figures 6(a) and 6(b).

Finally, although the cavities 3 are shown as extending parallel to the axis of rotation of the rotor in each case, they could extend along that axis, and in some cases one or more cavities 3 could extend into and/or within the rotor (1) in other directions, possibly even in radial directions.

## Claims

1. An electric motor having a rotor (1), comprising:
at least one cavity (3) in the rotor (1); and
at least one resilient member (50,60,70) fitted into a said cavity (3) for balance adjustment;
**characterised in that**:
the or each said resilient member (50,60,70) is a metal member formed to be oversized with respect to its cavity (3) and formed to be compressed for insertion therein, after which insertion the resilience of the compressed member urges the member to expand against the interior of its cavity, thereby serving to anchor the resilient member to the inner wall of its cavity.

2. An electric motor according to claim 1, wherein the or each said resilient member is a substantially cylindrical resilient member (60).

3. An electric motor according to claim 2, wherein the outer surface of the or each said resilient member (60) is provided with grooves (61).

4. An electric motor according to claim 3, wherein said grooves (61) are provided in a corrugated or latticed pattern.

5. An electric motor according to claim 1, wherein the or each said resilient member is a substantially planar member (70) with resilience at its outer peripheral portion (71).

6. An electric motor according to any preceding claim, wherein the or each said cavity (3) fitted with a said resilient member extends along or substantially parallel to the axis of rotation of the rotor (1).

7. An electric motor according to claim 6, wherein in the or each said cavity (3) fitted with a said resilient member, the resilient member tends to expand in a direction radial to the axis of rotation of the rotor (1).

8. A manufacturing method for an electric motor having a rotor (1), comprising fitting at least one resilient member (50,60,70) into a corresponding cavity (3) in the rotor (1) to provide balance adjustment;
**characterised in that**:
the or each said resilient member (50,60,70) is a metal member formed to be oversized with respect to its cavity (3) and formed to be compressed for insertion therein: the method comprising a step of inserting said member (50,60,70) into its cavity (3) so that after it has been inserted into its cavity (3), it lies compressed therein with its resilience urging the member to expand against the interior of its cavity, thereby serving to anchor the resilient member to the inner wall of its cavity.

9. A manufacturing method for an electric motor according to claim 8, wherein the or each said resilient member is a substantially cylindrical resilient member (60).

10. A manufacturing method for an electric motor according to claim 9, wherein the outer surface.of the or each said resilient member (60) comprises grooves (61).

11. A manufacturing method for an electric motor according to claim 10, wherein said grooves (61) are in a corrugated or latticed pattern.

12. A manufacturing method for an electric motor according to claim 8, wherein the or each said resilient member is a substantially planar member (70) with resilience at its outer peripheral portion (71).

13. A manufacturing method for an electric motor according to any of claims 8 to 21, wherein the or each said cavity extends along or substantially parallel to the axis of rotation of the rotor.

14. A manufacturing method for an electric motor according to claim 13, wherein in the or each said cavity, the resilient member tends to expand in a direction radial to the axis of rotation of the rotor, after the resilient member has been fitted in the cavity.

## Patentansprüche

1. Elektromotor, der einen Läufer (1) aufweist, umfassend:
mindestens eine Vertiefung (3) im Läufer (1); und
mindestens ein elastisches Teil (50, 60, 70), das zum Auswuchten in eine dieser Vertiefungen (3) eingesetzt wird;
**dadurch gekennzeichnet, dass**
das oder jedes elastische Teil (50, 60, 70) ein Metallteil ist, das bezüglich seiner Vertiefung (3) zu groß bemessen ist, und so geformt ist, dass es für das Einsetzen in die Vertiefung zusammengedrückt wird, wobei nach dem Einsetzen die Elastizität des zusammengedrückten Teils das Teil zwingt, sich gegen die Innenseite seiner Vertiefung auszudehnen, wodurch das elastische Teil an der Innenwand seiner Vertiefung befestigt wird.

2. Elektromotor nach Anspruch 1, wobei das oder jedes elastische Teil ein im Wesentlichen zylindrisches elastisches Teil (60) ist.

3. Elektromotor nach Anspruch 2, wobei die Außenfläche des oder jedes elastischen Teils (60) mit Nuten (61) versehen ist.

4. Elektromotor nach Anspruch 3, wobei die Nuten (61) in einem gewellten oder gitterförmigen Muster bereitgestellt sind.

5. Elektromotor nach Anspruch 1, wobei das oder jedes elastische Teil ein im Wesentlichen ebenes Teil (70) ist, das in seinem Außenrändabschnitt (71) elastisch ist.

6. Elektromotor nach irgendeinem vorhergehenden Anspruch, wobei sich die oder jede Vertiefung (3), in die ein elastisches Teil eingesetzt wird, entlang oder im Wesentlichen parallel zur Drehachse des Läufers (1) erstreckt.

7. Elektromotor nach Anspruch 6, wobei in der oder jeder Vertiefung (3), in die ein elastisches Teil eingesetzt ist, das elastische Teil versucht, sich in radialer Richtung bezüglich der Drehachse des Läufers (1) auszudehnen.

8. Verfahren zum Herstellen eines Elektromotors, der einen Läufer (1) aufweist, umfassend das Einsetzen mindestens eines elastischen Teils (50, 60, 70) in eine zugehörige Vertiefung (3) im Läufer (1), um eine Auswuchtung bereitzustellen;
**dadurch gekennzeichnet,**
**dass** das oder jedes elastische Teil (50, 60, 70) ein Metallteil ist, das bezüglich seiner Vertiefung (3) zu groß bemessen ist, dass es für das Einsetzen in die Vertiefung zusammengedrückt wird, und dass das Verfahren einen Schritt des Einsetzens des Teils (50, 60, 70) in seine Vertiefung (3) umfasst, so dass das Teil nach dem Einsetzen in seine Vertiefung (3) zusammengedrückt in der Vertiefung liegt, wobei seine Elastizität das Teil zwingt, sich gegen die Innenseite seiner Vertiefung auszudehnen, wodurch das elastische Teil an der Innenwand seiner Vertiefung befestigt wird.

9. Verfahren zum Herstellen eines Elektromotors nach Anspruch 8, wobei das oder jedes elastische Teil ein im Wesentlichen zylindrisches elastisches Teil (60) ist.

10. Verfahren zum Herstellen eines Elektromotors nach Anspruch 9, wobei die Außenfläche des oder jedes elastischen Teils (60) Nuten (61) enthält.

11. Verfahren zum Herstellen eines Elektromotors nach Anspruch 10, wobei die Nuten (61) in einem gewellten oder gitterförmigen Muster auftreten.

12. Verfahren zum Herstellen eines Elektromotors nach Anspruch 8, wobei das oder jedes elastische Teil ein im Wesentlichen ebenes Teil (70) ist, das in seinem Außenrandabschnitt (71) elastisch ist.

13. Verfahren zum Herstellen eines Elektromotors nach irgendeinem der Ansprüche 8 bis 12, wobei sich die oder jede Vertiefung entlang oder im Wesentlichen parallel zur Drehachse des Läufers erstreckt.

14. Verfahren zum Herstellen eines Elektromotors nach Anspruch 13, wobei in der oder jeder Vertiefung das elastische Teil versucht, sich in radialer Richtung bezüglich der Drehachse des Läufers auszudehnen, nachdem das elastische Teil in die Vertiefung eingesetzt worden ist.

## Revendications

1. Un moteur électrique ayant un rotor (1), comprenant :
au moins une cavité (3) dans le rotor (1) ; et
au moins un élément élastique (50, 60, 70) adapté dans ladite cavité (3) pour un ajustement de balourd ;
**caractérisé en ce que** :
le ou chacun des éléments élastiques (50, 60, 70) est un élément métallique formé pour être dimensionné par rapport à sa cavité (3) et formé pour être comprimé en vue d'une insertion à l'intérieur, insertion après laquelle l'élasticité de l'élément comprimé pousse l'élément à se déployer contre l'intérieur de sa cavité, en servant ainsi à ancrer l'élément élastique à la paroi interne de sa cavité.

2. Un moteur électrique selon la revendication 1, dans lequel le ou chacun desdits éléments élastiques est un élément élastique sensiblement cylindrique (60).

3. Un moteur électrique selon la revendication 2, dans lequel la surface externe du ou de chacun desdits éléments élastiques (60) est munie de rainures (61).

4. Un moteur électrique selon la revendication 3, dans lequel lesdites rainures (61) sont prévues dans un motif ondulé ou treillissé.

5. Un moteur électrique selon la revendication 1, dans lequel le ou chacun desdits éléments élastiques est un élément sensiblement plat (70) avec élasticité au niveau de sa partie périphérique externe (71).

6. Un moteur électrique selon une quelconque revendication précédente, dans lequel la ou chacune desdites cavités (3) dans laquelle est adapté un desdits éléments élastiques s'étend le long de l'axe de rotation du rotor (1) ou de manière sensiblement parallèle à celui-ci.

7. Un moteur électrique selon la revendication 6, dans lequel, dans la ou chacune desdites cavités (3) dans laquelle est adapté un desdits éléments élastiques, l'élément élastique tend à se déployer dans une direction radiale à l'axe de rotation du rotor (1).

8. Un procédé de fabrication pour un moteur électrique ayant un rotor (1), comprenant le fait d'adapter au moins un élément élastique (50, 60, 70) dans une cavité correspondante (3) du rotor (1) pour créer un ajustement de balourd ;
**caractérisé en ce que** :
le ou chacun desdits éléments élastiques (50, 60, 70) est un élément élastique formé pour être surdimensionné par rapport à sa cavité (3) et formé pour être comprimé en vue d'une insertion à l'intérieur, le procédé comprenant une étape consistant à insérer ledit élément (50, 60, 70) dans sa cavité (3) de sorte qu'après qu'il a été inséré dans sa cavité (3), il s'y trouve comprimé avec son élasticité poussant l'élément à se déployer contre l'intérieur de sa cavité, en servant ainsi à ancrer l'élément élastique à la paroi interne de sa cavité.

9. Un procédé de fabrication pour un moteur électrique selon la revendication 8, dans lequel le ou chacun desdits éléments élastiques est un élément élastique sensiblement cylindrique (60).

10. Un procédé de fabrication pour un moteur électrique selon la revendication 9, dans lequel la surface externe du ou de chacun desdits éléments élastiques (60) comprend des rainures (61).

11. Un procédé de fabrication pour un moteur électrique selon la revendication 10, dans lequel lesdites rainures (61) sont dans un motif ondulé ou treillissé.

12. Un procédé de fabrication pour un moteur électrique selon la revendication 8, dans lequel le ou chacun desdits éléments élastiques est un élément sensiblement plan (70) avec élasticité au niveau de sa partie périphérique externe (71).

13. Un procédé de fabrication pour un moteur électrique selon l'une quelconque des revendications 8 à 21, dans lequel la ou chacune desdites cavités s'étend le long de l'axe de rotation du rotor (1) ou de manière sensiblement parallèle à celui-ci.

14. Un procédé de fabrication pour un moteur électrique selon la revendication 13, dans lequel, dans la ou chacune desdites cavités, l'élément élastique tend à se déployer dans une direction radiale à l'axe de rotation du rotor, après que l'élément élastique a été adapté dans la cavité.
